# FASCICULE DE BREVET EUROPEEN

(11) **EP 2 803 543 B1**
(45) Date de publication et mention de la délivrance du brevet: **07.11.2018**
(21) Numéro de dépôt: 14167239.4
(22) Date de dépôt: 06.05.2014
(51) Int. Cl.: B60S 1/40, B60S 1/52, B60S 1/38

(54) **Interface de connexion hydraulique et/ou électrique pour balai d'essuie-glace**
Hydraulische und/oder elektrische Anschlussschnittstelle für Scheibenwischerarm
Hydraulic and/or electric connection interface for windscreen-wiper blade

(30) Priorité: 13.05.2013 FR 1354280
(43) Date de publication de la demande: 19.11.2014
(73) Titulaire: Valeo Systèmes d'Essuyage, 78322 Le Mesnil Saint Denis (FR)
(72) Inventeur: Izabel, Vincent, 91380 CHILLY MAZARIN (FR)
(74) Mandataire: Callu-Danseux, Violaine

(56) Documents cités:
- EP-A1- 2 460 700
- FR-A1- 2 968 256
- FR-A1- 2 968 258
- US-A1- 2012 284 948

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions, le balai est rattaché au porte-balai tournant de l'essuie-glace par un ensemble constitué d'un connecteur mécanique et d'un adaptateur. Le connecteur mécanique est une pièce qui est sertie sur le palonnier ou directement sur le balai plat, alors que l'adaptateur est une pièce intermédiaire qui permet la fixation du connecteur sur le porte-balai de l'essuie-glace. Ces deux pièces sont reliées l'une à l'autre par un axe transversal qui autorise leur rotation relative, dans un plan perpendiculaire au pare-brise et passant par le porte-balai.

Il est également connu de munir les véhicules de dispositifs permettant d'amener un liquide lave-vitre qui est acheminé depuis un réservoir situé sous le capot et qui est pulvérisé en direction du pare-brise par des buses situées soit à proximité du pare-brise, soit sur l'essuie-glace lui-même pour une meilleure distribution du liquide. Dans le cas de buses placées sur les balais, le liquide lave-vitre est acheminé par des canalisations qui sont fixées sur le porte-balai de l'essuie-glace et qui sont raccordées au balai au niveau du connecteur mécanique par une interface de connexion. L'interface de connexion se fixe sur le connecteur mécanique par des embouts appropriés et assure une nécessaire étanchéité avec lui.

Les canalisations de liquide et l'interface de connexion sont généralement liées au porte-balai de l'essuie-glace. Cependant, il est nécessaire d'assurer le branchement de l'interface de connexion sur le connecteur mécanique lors d'un changement de balai. Après ledit branchement, l'interface de connexion est liée au balai. Cette opération s'effectue dans une position, dite de service.

Il est nécessaire de veiller à ce que l'interface de connexion soit correctement alignée, lors de l'installation dans le connecteur mécanique, faute de quoi un mauvais assemblage se traduirait par un risque de fuite du liquide lave-vitre au niveau de la jonction des deux connecteurs.

En outre, lors du désaccouplement ou démontage du balai par rapport au porte-balai, il importe que l'interface de connexion reste attachée au porte-balai. Ceci évite que l'interface de connexion ne soit entraînée par le connecteur mécanique dans son mouvement de séparation d'avec le porte-balai de l'essuie-glace.

Il faut cependant que, après montage du balai dans le bras, l'interface de connexion ne limite pas la nécessaire liberté de mouvement en rotation de l'adaptateur par rapport au connecteur mécanique.

On connait à cette fin des balais d'essuie glace dont l'interface de connexion est maintenue en position de service par encliquetage dans des ouvertures d'une pièce intermédiaire interne au porte-balai, tel que celui décrit dans la demande WO2012072748.

Un certain nombre d'utilisateurs ont cependant eu des difficultés à passer le balai en position de service dès lors que celle-ci est réalisée à l'intérieur du porte-balai, sans être visible par l'utilisateur.

La présente invention a pour but de remédier à ces inconvénients en tout ou partie.

A cet effet, l'invention a pour objet un ensemble pour la réalisation d'un système d'essuyage de pare-brise de véhicule, comprenant une pièce terminale d'un porte-balai d'essuyage, destiné à déplacer un balai d'essuyage, une interface de connexion et une pièce intermédiaire dite cavalier, ledit ensemble étant apte à occuper une position de travail dans laquelle ladite interface est libre par rapport à ladite pièce terminale et une position dite de service dans laquelle ladite interface est retenue de manière orientée à l'intérieur de ladite pièce terminale par ledit cavalier.

Selon l'invention, au moins une partie dudit cavalier est configurée de sorte à être accessible de façon à pouvoir être manipulé pour passer de la position de travail à la position de service, ledit cavalier étant mobile en translation selon une direction longitudinale de ladite pièce terminale, ledit ensemble comportant au moins un premier ergot situé sur l'un des éléments parmi ledit cavalier et ladite interface, et au moins un logement, situé sur l'autre élément, le ou lesdits premiers ergots étant aptes à venir se loger dans le ou lesdits logements en position de service, ledit cavalier comportant des formes aptes à guider le ou lesdits premiers ergots vers le ou lesdits logements.

Les opérations de montage sont ainsi plus intuitives car elles font appel à une pièce, à savoir le cavalier, visible extérieurement. En outre, grâce au guidage de l'interface par rapport au cavalier, le risque de fausse manoeuvre est diminué et le montage d'un balai de rechange est facilité, en particulier quant à la connexion de l'interface au balai.

Selon différents modes de réalisation de l'invention, qui pourront être pris ensemble ou séparément :
- le ou lesdits logements sont situés sur ledit cavalier et définissent une première butée,
- le ou lesdits premiers ergots sont cylindriques,
- les formes aptes à guider le ou lesdits premiers ergots vers le ou lesdits logements sont des pentes de guidage,
- lesdites pentes de guidage forment un, ou des entonnoirs,
- ledit cavalier comporte au moins une deuxième butée apte à empêcher ladite interface de pivoter par rapport audit cavalier,
- la ou lesdites deuxièmes butées sont configurées pour prendre appui sur ladite interface, en position de service, à distance du ou desdits premiers ergots,
- ladite interface présente des moyens aptes à la bloquer sur un connecteur dit mécanique fixé audit balai d'essuyage, en position de travail,
- lesdits moyens sont des seconds ergots, différents du ou des premiers ergots,
- lesdits seconds ergots sont cylindriques et aptes à être retenus par des contre-formes, lesdites contre-formes étant au moins en partie cylindriques et appartenant audit connecteur mécanique,
- ladite interface de connexion comprend au moins un connecteur hydraulique et/ou un connecteur électrique,
- ladite interface comprend des moyens assurant le verrouillage du connecteur électrique audit connecteur hydraulique,
- ledit cavalier comprend un bouton permettant de le faire passer de ladite position de travail à ladite position de service, ledit bouton étant mobile le long d'une fente située sur ladite pièce terminale et orientée selon une direction de montage et/ou démontage du balai dans ladite pièce terminale,
- ladite fente est située sur une face de ladite pièce terminale destinée à être située à l'opposé du balai.

L'aspect intuitif des manoeuvres à effectuer pour le montage/démontage du balai est ainsi renforcé.

L'invention concerne aussi un dispositif de connexion d'un système d'essuyage de pare-brise de véhicule comprenant un ensemble tel que décrit précédemment.

L'invention concerne encore un système d'essuyage de pare-brise de véhicule comprenant un balai, un porte-balai et un dispositif de connexion tel que décrit précédemment, permettant d'accrocher ledit balai audit porte-balai.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés. Sur ces dessins :
- la figure 1 est une vue en perspective d'un ensemble selon l'invention, en position de travail,
- la figure 2 est la même vue qu'à la figure 1, la pièce terminale du porte-balai étant écorchée pour rendre visible l'interface de connexion, le cavalier et l'adaptateur d'un dispositif de connexion selon l'invention,
- la figure 3 reprend la figure 2 selon un angle de vue différent ;
- la figure 4 reprend la figure 3 et permet de visualiser la manière dont le cavalier de l'invention est manipulé pour entrainer l'interface de connexion de la position de travail vers la position de service,
- la figure 5 est une vue en perspective de l'ensemble selon l'invention, en position de service,
- la figure 6 est la même vue qu'à la figure 5, la pièce terminale du porte-balai étant écorchée pour rendre visible l'interface de connexion retenue par le cavalier à l'intérieur de ladite pièce terminale.

Comme illustré aux différentes figures, l'invention concerne un système d'essuyage 10 de pare-brise de véhicule. Ce système comprend un bras ou porte-balai d'essuyage 12 qui présente une partie terminale ou tête de bras 14, dite pièce terminale par la suite. Le porte-balai d'essuyage 12 est destiné à déplacer un balai d'essuyage 16 dudit système d'essuyage à la surface d'un pare-brise de véhicule.

Le balai 16 est rattaché au porte-balai 12 par un connecteur mécanique 20 et un adaptateur 30 d'un dispositif de connexion dudit système d'essuyage. Le connecteur mécanique 20 est une pièce qui, par exemple, est sertie sur le balai 16. L'adaptateur 30 est une pièce intermédiaire qui permet la fixation du connecteur 20 sur la pièce terminale 14 du porte-balai 12. Ces deux pièces sont reliées l'une à l'autre par un axe transversal qui autorise leur rotation relative, dans un plan perpendiculaire au pare-brise et passant par le porte-balai 12.

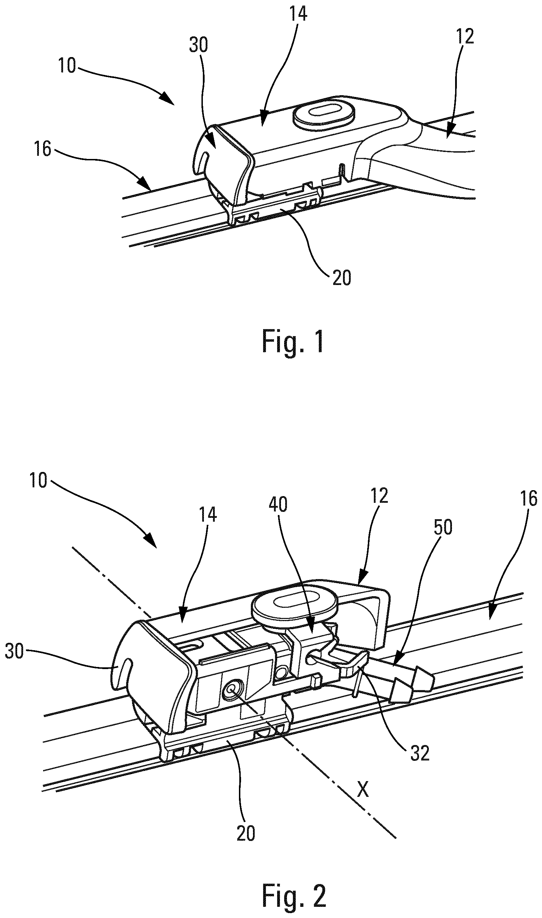

Cet axe transversal X est visible sur la figure 2. Il est aussi visible, sur cette figure 2, une interface de connexion 50 dudit dispositif de connexion. Cette interface de connexion 50 permet l'alimentation du balai 16 en liquide lave-vitre et/ou en électricité lorsqu'il est prévu de pouvoir chauffer la structure dudit balai 16, par exemple.

Pour rappel, les figures 1 et 2 sont des vues en perspective d'un ensemble selon l'invention, en position de travail, ledit ensemble comprenant ladite pièce terminale 14 et ladite interface de connexion 50.

Dans la position de travail, l'interface 50 est libre par rapport à ladite pièce terminale 14 mais elle est maintenue par rapport au balai 16. Ce maintien est ici réalisé, à la fois par une partie distale de pattes 32 appartenant à l'adaptateur par le connecteur 20 qui présente des formes caractéristiques permettant de retenir ladite interface de connexion 50.

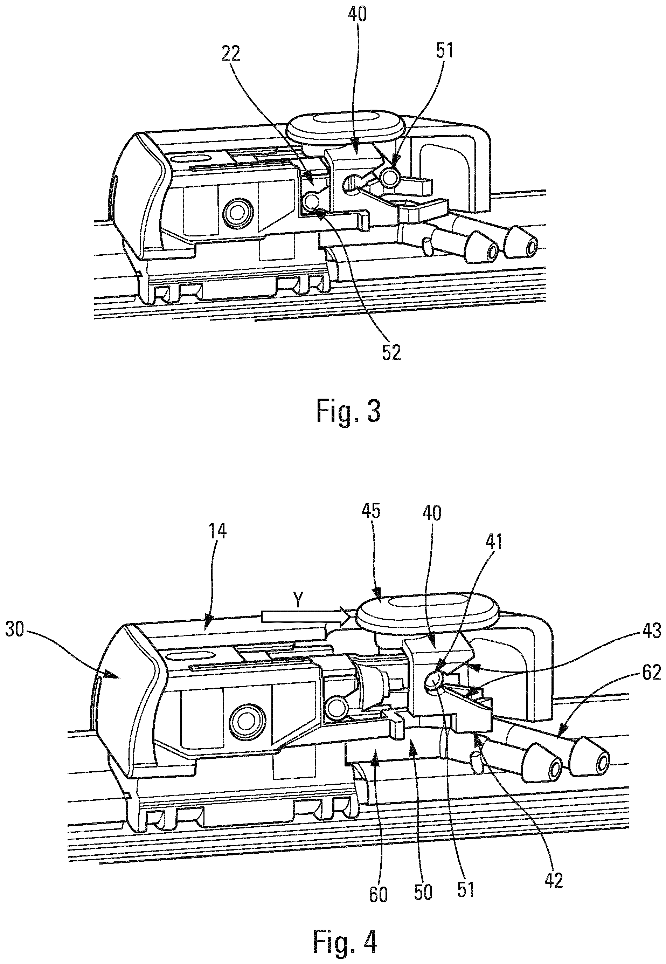

Un exemple de réalisation de ces formes caractéristiques est visible sur la figure 3. Il s'agit de contre-formes 22, en partie cylindriques, qui coopèrent avec des ergots 52 appartenant à l'interface de connexion 50. Les contre-formes 22 ne sont pas fermées, elles présentent chacune une ouverture empruntée par chacun des ergots 52 pour venir s'y loger. Ces ergots 52 sont de préférence au nombre de deux, situés sur des faces latérales de l'interface 50, opposées l'une à l'autre par rapport à une direction d'extension longitudinale de ladite interface 50, la longueur de ladite interface 50 étant orientée dans la direction longitudinale de la pièce terminale 14.

Ces ergots 52 seront appelés seconds ergots par la suite, en comparaison à des premiers ergots 51 qui appartiennent aussi à l'interface de connexion 50 mais qui ont une autre fonction.

Lesdits premiers ergots 51 sont visibles sur la figure 3 ; leur fonction est avantageusement illustrée à la figure 4. Ces premiers ergots 51 sont, de préférence, au nombre de deux, situés ici sur les faces latérales de l'interface 50, opposés l'un à l'autre par rapport à la largeur de ladite interface 50. Il est à noter que lesdits seconds ergots 52 sont plus proches du connecteur mécanique 20 que peuvent l'être lesdits premiers ergots 51.

Les premiers ergots 51 sont particulièrement avantageux car ils participent au passage de l'ensemble selon l'invention, de la position de travail à celle dite de service.

La position de service, illustrée à la figure 4, est la position pour laquelle le balai 16 est désassemblé du porte-balai 12. Dans la position de service, l'interface 50 est retenue de manière orientée à l'intérieur de la pièce terminale 14. Cette retenue est permise par une pièce intermédiaire, dite cavalier 40.

En effet, lesdits premiers ergots 51 sont aptes à venir en contact avec le cavalier 40, en particulier dans des logements 41 de celui-ci. L'entrée des ergots 51 dans les logements 41 est facilitée par des formes 43 de guidage, à savoir des pentes de guidage qui, lorsqu'elles sont couplées, forment des entonnoirs. Les premiers ergots 51 sont de préférence cylindriques pour faciliter le guidage des premiers ergots 51 vers les logements 41.

Lesdits logements 41 agissent comme des premières butées entre l'interface 50 et le cavalier 40. C'est pourquoi toute autre forme est envisageable pour lesdits premiers ergots qui peuvent aussi être parallélépipédiques ou pyramidaux, par exemple.

Le cavalier 40 est aussi muni de deuxièmes butées 42 qui empêchent l'interface 50 de pivoter par rapport à lui, en particulier en cas de premiers ergots 51 cylindriques. Ces deuxièmes butées 42 empêchent de la sorte le pivotement de ladite interface dans la pièce terminale lors du désaccouplement du balai 16 par rapport à la pièce terminale 14. Lesdites deuxièmes butées 42 sont ici configurées pour prendre appui sur l'interface 50, en particulier sur les canalisations de liquide 62 d'un connecteur hydraulique 60 appartenant à l'interface de connexion 50.

Il est à noter qu'en position de travail, le cavalier 40 n'entre avantageusement pas en contact avec l'interface 50 comme cela est visible sur les figures 2 et 3.

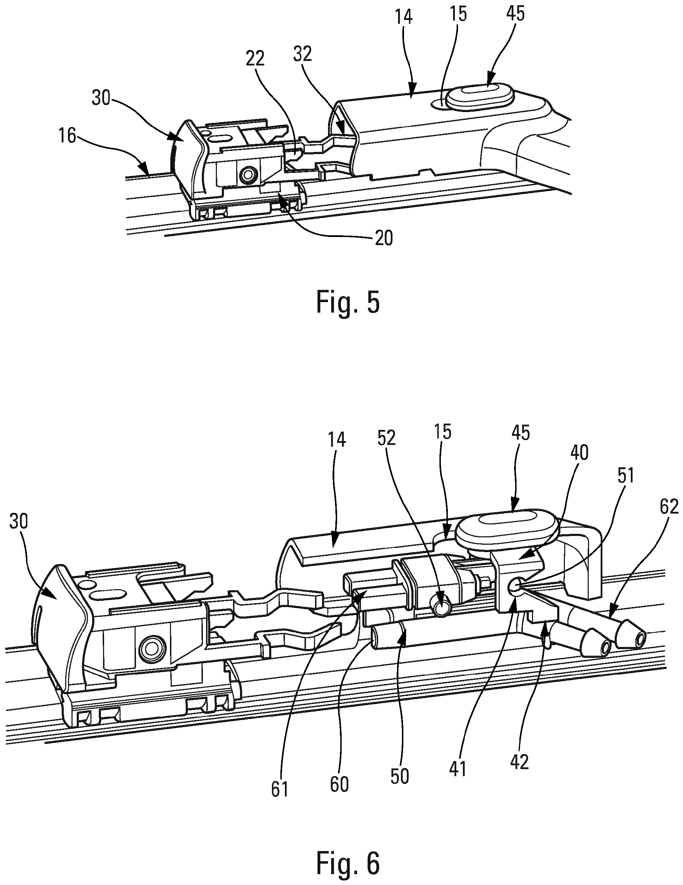

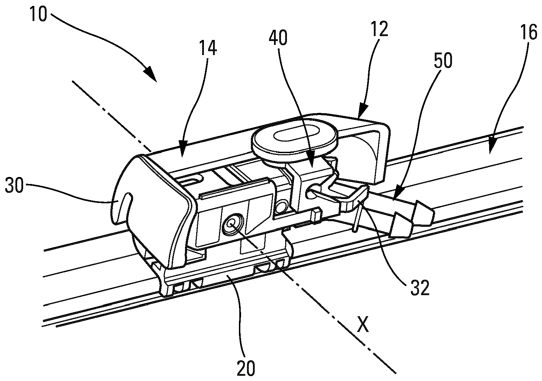

La figure 5 est une vue en perspective de l'ensemble selon l'invention en position de service. On peut y constater que l'interface 50 n'est plus couplée au balai 16, l'adaptateur 30 ayant été désassemblé de la pièce terminale 14. Cela signifie que les deuxièmes ergots 52 ne sont plus en prise dans les contre-formes 22 du connecteur 20. Cela signifie aussi que la partie distale de pattes 32 de l'adaptateur 30 ne vient plus en butée avec l'interface de connexion 50.

La figure 6 est la même vue qu'à la figure 5, la pièce terminale du porte-balai étant écorchée pour rendre visible l'interface de connexion. On peut y constater que l'interface 50 est alors retenue par le cavalier 40 à l'intérieur de la pièce terminale 14. Cette figure illustre le double verrouillage de l'interface 50 à l'intérieur de la pièce terminale 14 ; ce double verrouillage étant réalisé par le cavalier 40, à l'aide des butées 41 et 42 décrites ci-dessus, et permettant d'orienter l'interface pour faciliter le montage d'un nouveau balai.

Il est à noter que cette invention concerne de préférence la connexion hydraulique et/ou électrique d'un balai d'essuyage 16 possédant une fonction de lavage embarqué et/ou un système de chauffage de sa structure. En particulier, cette invention concerne la connexion et la déconnexion hydraulique et/ou électrique du balai 16, d'avec le porte-balai 12 en un seul mouvement lors du désassemblage du balai 16 de son porte-balai 12.

La description des figures 1 à 3 a permis de mettre en évidence que l'interface de connexion 50 est retenu sur le balai 16 via le connecteur 20 en position de travail, à savoir lorsque le balai 16 et le porte-balai 12 sont assemblés, tout en autorisant la rotation du balai par rapport au bras autour de l'axe X.

La description des figures 4 à 6 a permis d'introduire le cavalier 40 qui vient buter, entre autres, contre les premiers ergots 51 de l'interface de connexion lors du passage de la position de travail à la position de service ; la position de service correspondant au désassemblage entre le balai 16 et le porte-balai 12, l'interface de connexion 50 étant alors maintenue orientée par rapport au bras.

L'action de désassemblage s'effectue lorsque l'on coulisse le cavalier 40 par rapport à la pièce terminale 14 du porte-balai 12. Cela est permis car une partie du cavalier 40 est accessible de façon à pouvoir être manipulé pour passer de la position de travail à la position de service.

Comme il est visible aux figures 4 à 6, le cavalier comprend en effet un bouton 45 permettant de le faire passer de la position de travail à la position de service. Le bouton 45 est mobile le long d'une fente 15 située sur ladite pièce terminale et orientée selon une direction de montage et/ou démontage. Cette fente 15 est située, de préférence, sur une face de ladite pièce terminale 14 destinée à être située à l'opposé du balai 16. Elle pourra être située sur une ou plusieurs autres faces de la pièce terminale 14.

D'autre part, la pièce terminale 14 est prévue afin de couvrir en partie l'interface 50 et ledit cavalier 40, à l'exception dudit bouton 45.

La direction de montage et/ou démontage est indiquée par une flèche Y sur la figure 4. Dans le cas de cette flèche Y, le bouton 45 est actionné dans la fente 15 dans le sens du démontage de l'adaptateur 30 - la fente 15 étant particulièrement visible sur les figures 5 et 6. L'actionnement du bouton 45 conduit le cavalier 40 à venir en butée avec l'interface 50, en deux endroits : par les premières butées 41 et les secondes butées 42. Il est alors possible de tirer longitudinalement sur le balai 16 pour le désassembler du porte-balai 12 tout en retenant l'interface 50 dans la partie terminale 14 du porte-balai 12. Pour rappel, ceci évite que ladite interface 50 ne soit entraînée par le connecteur mécanique 20 dans son mouvement de séparation d'avec le porte-balai 12 de l'essuie-glace.

Pour le remontage on effectue les opérations inverses.

Il est à noter que dans l'exemple décrit ci-dessus, l'interface de connexion 50 comprend un connecteur hydraulique 60 et un connecteur électrique 61, comme cela est particulièrement visible sur la figure 6 ; ladite interface 50 comprenant des moyens assurant le verrouillage du connecteur hydraulique 61 sur le connecteur électrique 60 (moyens de verrouillage non détaillés sur les figures).

Ici, les premiers et seconds ergots 51, 52 sont sur le connecteur électrique 60 plutôt que sur le connecteur hydraulique. Il est cependant possible de les prévoir sur le connecteur hydraulique.

Il est aussi à noter que d'autres variantes de réalisation sont bien sûr possibles. Notamment il est aussi envisageable, dans un mode de réalisation supplémentaire, que les premiers et seconds ergots dudit ensemble soient situés sur le cavalier 40 alors que les butées seraient, quant à elles, situées sur l'interface 50.

## Revendications

1. Ensemble pour la réalisation d'un système d'essuyage (10) de pare-brise de véhicule, comprenant une pièce terminale (14) d'un porte-balai d'essuyage (12), destiné à déplacer un balai d'essuyage (16), une interface de connexion (50) et une pièce intermédiaire (40) dite cavalier, ledit ensemble étant apte à occuper une position de travail dans laquelle ladite interface (50) est libre par rapport à ladite pièce terminale (14) et une position dite de service dans laquelle ladite interface (50) est retenue de manière orientée à l'intérieur de ladite pièce terminale (14) par ledit cavalier (40), **caractérisé en ce que** au moins une partie dudit cavalier (40) est configurée de sorte à être accessible de façon à pouvoir être manipulé pour passer de la position de travail à la position de service, ledit cavalier (40) étant mobile en translation selon une direction longitudinale de ladite pièce terminale (14), et **en ce que** ledit ensemble comporte au moins un premier ergot situé sur l'un des éléments parmi ledit cavalier (40) et ladite interface (50), et au moins un logement, situé sur l'autre élément, le ou lesdits premiers ergots étant aptes à venir se loger dans le ou lesdits logements en position de service, ledit cavalier (40) comportant des formes aptes à guider le ou lesdits premiers ergots vers le ou lesdits logements.

2. Ensemble selon la revendication précédente, dans lequel le ou lesdits logements (41) sont situés sur ledit cavalier (40) et définissent une première butée.

3. Ensemble selon l'une quelconque des revendications précédentes, dans lequel le ou lesdits premiers ergots (51) sont cylindriques.

4. Ensemble selon l'une quelconque des revendications 2 ou 3, dans lequel ledit cavalier (40) comporte au moins une deuxième butée (42) apte à empêcher ladite interface (50) de pivoter par rapport audit cavalier (40).

5. Ensemble selon la revendication précédente, dans lequel la ou lesdites deuxièmes butées (42) sont configurées pour prendre appui sur ladite interface (50), en position de service, à distance du ou desdits premiers ergots (41).

6. Ensemble selon l'une quelconque des revendications précédentes, dans lequel ladite interface (50) présente des moyens aptes à la bloquer sur un connecteur dit mécanique (20) fixé audit balai d'essuyage (16), en position de travail.

7. Ensemble selon la revendication précédente, dans lequel lesdits moyens sont des seconds ergots (52), différents du ou des premiers ergots (51).

8. Ensemble selon la revendication précédente, dans lequel lesdits seconds ergots (52) sont cylindriques et aptes à être retenus par des contre-formes (22), lesdites contre-formes (22) étant au moins en partie cylindriques et appartenant audit connecteur mécanique (20).

9. Ensemble selon l'une quelconque des revendications précédentes, dans laquelle ladite interface de connexion (50) comprend au moins un connecteur hydraulique (60) et/ou un connecteur électrique (61).

10. Ensemble selon l'une quelconque des revendications précédentes, dans lequel ledit cavalier (40) comprend un bouton (45) permettant de le faire passer de ladite position de travail à ladite position de service, ledit bouton (45) étant mobile le long d'une fente (15) située sur ladite pièce terminale (14) et orientée selon une direction de montage et/ou démontage du balai (16) dans ladite pièce terminale (14).

11. Ensemble selon la revendication précédente, dans lequel ladite fente (15) est située sur une face de ladite pièce terminale (14) destinée à être située à l'opposé du balai (16).

12. Dispositif de connexion d'un système d'essuyage (10) de pare-brise de véhicule comprenant un ensemble selon l'une quelconque des revendications précédentes.

13. Système d'essuyage (10) de pare-brise de véhicule comprenant un balai (16), un porte-balai (12) et un dispositif de connexion selon la revendication 13 permettant d'accrocher ledit balai (16) audit porte-balai (12).

## Patentansprüche

1. Anordnung zur Herstellung eines Wischersystems (10) einer Fahrzeugwindschutzscheibe, umfassend ein Endstück (14) eines Wischerblattträgers (12), der dazu bestimmt ist, ein Wischerblatt (16) zu verlagern, eine Anschlussschnittstelle (50) und ein Zwischenstück (40), Reiter genannt, wobei die Anordnung geeignet ist, eine Arbeitsposition, in der die Schnittstelle (50) in Bezug zum Endstück (14) frei ist, und eine so genannte Betriebsposition einzunehmen, in der die Schnittstelle (50) zum Inneren des Endstücks (14) durch den Reiter (40) gehalten wird, **dadurch gekennzeichnet, dass** mindestens ein Teil des Reiters (40) eingerichtet ist, zugänglich zu sein, um betätigt zu werden, um von der Arbeitsposition in die Betriebsposition überzugehen, wobei der Reiter (40) in Translation in eine Längsrichtung des Endstücks (14) beweglich ist, und dass die Anordnung mindestens einen ersten Haken, der auf einem der Elemente untere dem Reiter (40) und der Schnittstelle (50) angeordnet ist, und mindestens eine Aufnahme umfasst, die auf dem anderen Element angeordnet ist, wobei der oder die ersten Haken geeignet sind, sich in der oder den Aufnahmen in Betriebsposition anzuordnen, wobei der Reiter (40) Formen umfasst, die geeignet sind, den oder die ersten Haken zu der oder den Aufnahmen zu führen.

2. Anordnung nach dem vorhergehenden Anspruch, bei der die Aufnahme (n) (41) auf dem Reiter (40) angeordnet sind und einen ersten Anschlag definierten.

3. Anordnung nach einem der vorhergehenden Ansprüche, bei der der oder die ersten Haken (51) zylindrisch sind.

4. Anordnung nach einem der Ansprüche 2 oder 3, bei der der Reiter (40) mindestens einen zweiten Anschlag (42) umfasst, der geeignet ist, die Schnittstelle (50) daran zu hindern, in Bezug zum Reiter (40) zu schwenken.

5. Anordnung nach dem vorhergehenden Anspruch, bei der der oder die zweiten Anschläge (42) eingerichtet sind, um auf der Schnittstelle (50) in Betriebsposition in einem Abstand zu dem oder den ersten Haken (41) zur Auflage zu gelangen.

6. Anordnung nach einem der vorhergehenden Ansprüche, bei der die Schnittstelle (50) Mittel aufweist, die geeignet sind, sie auf einem so genannten mechanischen (20) Verbinder, der am Wischerblatt (16) befestigt ist, in Arbeitsposition festzustellen.

7. Anordnung nach dem vorhergehenden Anspruch, bei der die Mittel zweite Hakten (52) sind, die sich von dem oder den ersten Haken (51) unterscheiden.

8. Anordnung nach dem vorhergehenden Anspruch, bei der die zweiten Haken (52) zylindrisch und geeignet sind, durch Gegenformen (22) gehalten zu werden, wobei die Gegenformen (22) zumindest teilweise zylindrisch sind und dem mechanischen Verbinder (20) angehören.

9. Anordnung nach einem der vorhergehenden Ansprüche, bei der die Anschlussschnittstelle (50) mindestens einen hydraulischen Verbinder (60) und/oder einen elektrischen Verbinder (61) umfasst.

10. Anordnung nach einem der vorhergehenden Ansprüche, bei der der Reiter (40) einen Knopf (45) umfasst, der es ermöglicht, ihn von der Arbeitsposition in die Betriebsposition übergehen zu lassen, wobei der Knopf (45) entlang eines Schlitzes (15) beweglich ist, der auf dem Endstück (14) angeordnet und in eine Montage- und/oder Demontagerichtung des Wischerblattes (16) in dem Endstück (14) ausgerichtet ist.

11. Anordnung nach dem vorhergehenden Anspruch, bei der der Schlitz (15) auf einer Seite des Endstücks (14) angeordnet ist, die dazu bestimmt ist, gegenüber dem Wischerblatt (16) angeordnet zu sein.

12. Anschlussvorrichtung eines Wischersystems (10) einer Fahrzeugwindschutzscheibe, umfassend eine Anordnung nach einem der vorhergehenden Ansprüche.

13. Wischersystem (10) einer Fahrzeugwindschutzscheibe, umfassend ein Wischerblatt (16), einen Wischerblattträger (12) und eine Anschlussvorrichtung nach Anspruch 12, die es ermöglicht, das Wischerblatt (16) am Wischerblattträger (12) zu befestigen.

## Claims

1. Assembly for producing a vehicle windscreen wiping system (10), including an end fitting (14) of a wiper arm (12) adapted to move a wiper (16), a connection interface (50) and an intermediate part (40) called clamp, said assembly being adapted to occupy a working position in which said interface (50) is free relative to said end fitting (14) and a so-called service position in which said interface (50) is retained in an oriented manner inside said end fitting (14) by said clamp (40), **characterized in that** at least a part of said clamp (40) is configured in such a way as to be accessible so as to be able to be manipulated to switch from the working position to the service position, said clamp (40) being translationally mobile in a longitudinal direction of said end fitting (14), and **in that** said assembly comprises at least one first snug situated on one of the elements out of said clamp (40) and said interface (50), and at least one recess, situated on the other element, said first snug or snugs being suitable for being housed in said recess or recesses in the service position, said clamp (40) comprising shapes suitable for guiding said first snug or snugs towards said recess or recesses.

2. Assembly according to the preceding claim, wherein said recess or recesses (41) is/are situated on said clamp (40) and define a first abutment.

3. Assembly according to either one of the preceding claims, wherein said first snug or snugs (51) is/are cylindrical.

4. Assembly according to either one of Claims 2 and 3, wherein said clamp (40) comprises at least one second abutment (42) suitable for preventing said interface (50) from pivoting relative to said clamp (40) .

5. Assembly according to the preceding claim, wherein said second abutment or abutments (42) is/are configured to bear on said interface (50), in the service position, at a distance from said first snug or snugs (41).

6. Assembly according to any one of the preceding claims, wherein said interface (50) has means suitable for immobilizing it on a so-called mechanical connector (20) fixed to said wiper (16), in the working position.

7. Assembly according to the preceding claim, wherein said means are second snugs (52), different from the first snug or snugs (51).

8. Assembly according to the preceding claim, wherein said second snugs (52) are cylindrical and suitable for being retained by key-forms (22), said key-forms (22) being at least partly cylindrical and belonging to said mechanical connector (20).

9. Assembly according to any one of the preceding claims, wherein said connection interface (50) comprises at least one hydraulic connector (60) and/or one electrical connector (61).

10. Assembly according to any one of the preceding claims, wherein said clamp (40) comprises a button (45) making it possible to switch it from said working position to said service position, said button (45) being mobile along a slot (15) situated on said end fitting (14) and oriented in a direction of mounting and/or removal of the wiper (16) in said end fitting (14).

11. Assembly according to the preceding claim, wherein said slot (15) is situated on a face of said end fitting (14) intended to be situated opposite the wiper (16).

12. Connection device for a vehicle windscreen wiping system (10) comprising an assembly according to any one of the preceding claims.

13. Vehicle windscreen wiping system (10) including a wiper (16), a wiper arm (12) and a connection device according to Claim 12 for attaching said wiper (16) to said wiper arm (12).
